# EUROPEAN PATENT APPLICATION

(11) **EP 3 434 416 A1**
(43) Date of publication of application: **30.01.2019**
(21) Application number: 18185444.9
(22) Date of filing: 25.07.2018
(51) Int. Cl.: B25B 7/16, E04H 12/08, F16D 1/10, F16L 1/10, E04H 12/34, F03D 13/10, B25B 27/16

(54) **ADJUSTMENT PLATE**

(30) Priority: 26.07.2017 GB 201712055
(71) Applicant: O'Kane, Joseph, Livingston, Edinburgh EH54 6AL (GB)
(72) Inventor: O'Kane, Joseph, Livingston, Edinburgh EH54 6AL (GB)
(74) Representative: HGF Limited

(57) **Abstract**

An adjustment device for adjusting the position of a first machine part relative to the position of a second machine part is provided. The device comprises a plate, at least one handle extending from the plate, and at least two fasteners. The plate extends in a plane and the at least one handle extends away from the plate within or parallel to the plane. The at least two fasteners are configured to allow the device to be fastened to a first machine part such that by gripping and applying force to the at least one handle, the position of the first machine part may be adjusted relative to a second machine part.

## Description

### Field of the Invention

The invention relates to the field of adjustment tools, specifically to the field of adjustment tools that allow the relative positioning of two devices to be adjusted.

### Background of the Invention

Large machines are often assembled on site from two or more parts. Where these two or more parts of substantial in size and weight it is difficult for individual operators to adjust the relative positioning of the parts. Typically, when a second part is to be assembled on top of a first, installed, part, the second part is suspended or supported by a crane or similar and the position of each part adjusted manually to ensure that the fixings are lined up corrected to allow the second part to be secured to the first. Such manual adjustment often involves an operator placing their hands orfingers within the bolt holes of the first or second part to thereby adjust the position of that part. As a result, there is an inherent risk of hand or finger injury to the user should the two parts move relatively to each other unexpectedly.

Therefore, there is a need for an improved method of adjusting the position of large machinery parts that at least improves the safety of the user.

Accordingly, at least some aspects of the invention provides a device that improves the safety of the operator when adjusting the relative position of two parts of machinery during assembly.

### Summary of the Invention

According to a first aspect of the invention there is provided an adjustment device comprising a plate, at least one handle extending from the plate, and at least two fasteners, the plate extending in a plane and the at least one handle extending from the plate within or parallel to the plane, wherein the at least two fasteners are configured to allow the device to be fastened to a first machine part such that by gripping and applying force to the at least one handle, the position of the first machine part may be adjusted relative to a second machine part.

When two large machine parts are to be assembled, they often need their relative positions to be adjusted during assembly. For example, when a wind turbine is assembled, the middle section is often supported or suspended above a base section and the relative position of the two sections adjusted to ensure that the bolt holes that are to be used to secure the two sections together are aligned.

This adjustment of the machine parts is often carried out manually with the operator inserting their hands or fingers into the bolt holes and adjusting the position of the second, supported machine part relative to the first until the bolt holes are aligned sufficiently to allow bolts to be inserted through the bolt holes of both machine parts.

The machine parts are typically very heavy, often weighing more than 100 tonnes. Therefore, manual adjustment of these machine parts is inherently dangerous, as sudden, unexpected movement of such heavy objects can easily injure the operator.

The device of the invention allows the operator to readily adjust the position of the supported machine part by gripping the at least one handle of the device and applying a force to the handle. The hands of the operator are no longer required to be inserted into the bolt holes of the supported machine part and therefore prevents injury to the hands or fingers of the operator.

The at least one handle may extend over or from a first edge of the plate. The at least two fasteners may be located adjacent to a second edge of the plate that is opposed to the first edge of the plate.

Preferably, the device comprises two handles and the operator grips both handles to apply a force to move the position of the supported machine part relative to a second machine part. As a result, the operator may be able to apply a greater force to the device and therefore the supported machine part. The operator may have greater control over the movement of the supported machine part.

In embodiments where the device comprises two handles, the handles may be provided adjacent to opposed edges of the device.

The at least two fasteners may be configured to allow the device to be attached or secured to the machine part to be adjusted via the fasteners provided on the machine part to fasten that machine part to a second machine part. For example, in embodiments where the machine part comprises apertures such as bolt holes that are to be aligned with bolt holes on a second machine part, the at least two fasteners may be bolt holes of a similar or the same diameter to thereby allow the device to be bolted to the machine part via the bolt holes of the machine part.

The at least two fasteners may be configured to allow the device to be attached or secured to the machine part via adjacent fasteners on the machine part. The at least two fasteners may be spaced on the device to match the spacing of adjacent fasteners of the machine part.

The at least two fasteners may be configured to allow the device to be attached or secured to the machine part via fasteners that are not adjacent. For example, the at least two fasteners may be spaced on the device to match the spacing of every other fastener of the machine part to thereby allow the device to be attached or secured to the machine part by a first and third fastener on the machine part. Further variations of this principle may be applied by the person skilled in the art (attached to first and fourth fasteners of the machine part etc) and are hereby included in the scope of the invention.

The plate may be rectangular. The plate may be oblong. The plate may be square. Typically, the plate is dimensioned to allow the device to be secured to at least two fasteners of the machine part to be moved i.e. the plate is larger than the spacing between two sequential fasteners of the machine part to be adjusted or moved.

In some embodiments, the plate may comprise a flange along the first edge. The at least one handle may extend from the flange.

The device may comprise a securement point. During use, a line may be attached to the device via the securement point connecting the device to first or second machine part, or to a crane, for example. In the event that the fasteners that are attaching or securing the device to a first machine part fail, the device is still connected to and thereby secured to the first or second machine part or to the crane by the line. Accordingly, the device is prevented from falling to the ground, which may damage the device, damage equipment on the ground or injure someone on the ground. Accordingly, the provision of a securement point improves the safety of the device.

According to a second aspect of the invention there is provided a method of adjusting the position of first machine part relative to the position of a second machine part, the method comprising the steps:
providing a device according to the first aspect of the invention;
attaching the device to the first machine part; and
applying force to the handles of the device to thereby adjust the position of the first machine part relative to the first machine part.

Where the relative position of machine parts during assembly is adjust manually, an operator is required to insert their hands or fingers into the bolt holes or other fasteners to thereby adjust the position of the first machine part relative to the second machine part. Such adjustment is inherently dangerous and risks injury to the operator. Accordingly, adjusting the position of a first machine part relative to a second machine part using the method of the present aspect allows an operator to manually make the required adjustments without lacing their hands into or close to the bolt holes or other fasteners, thereby minimising the risk of injury to the operator.

### Brief Description of the Figures

Embodiments of the present invention will now be described, by way of non-limiting example, with reference to the accompanying drawings.
Figure 1 is a photograph of a device according to an embodiment of the invention attached to a machine part;
Figure 2 is a photograph of a device according to an embodiment of the invention attached to a machine part;
Figure 3 is a photograph of a machine part with a device according to an embodiment of the invention attached;
Figure 4 is a photograph of a device according to an embodiment of the invention attached to a machine part.

### Detailed Description

While the making and using of various embodiments of the present invention are discussed in detail below, it should be appreciated that the present invention provides many applicable inventive concepts that can be embodied in a wide variety of specific contexts. The specific embodiments discussed herein are merely illustrative of specific ways to make and use the invention and do not delimit the scope of the invention.

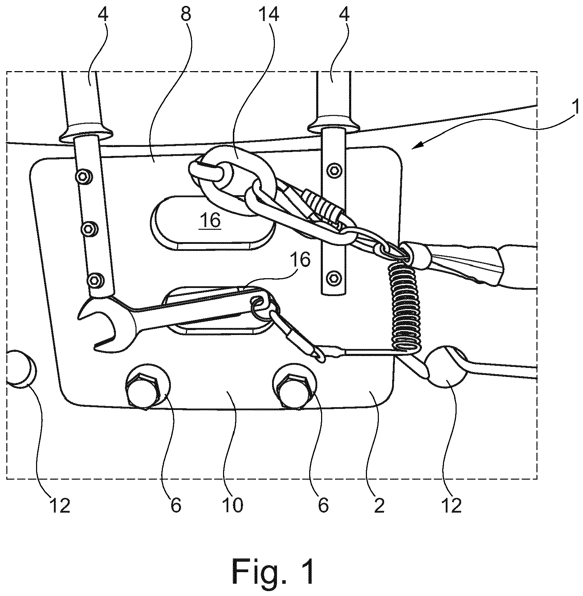

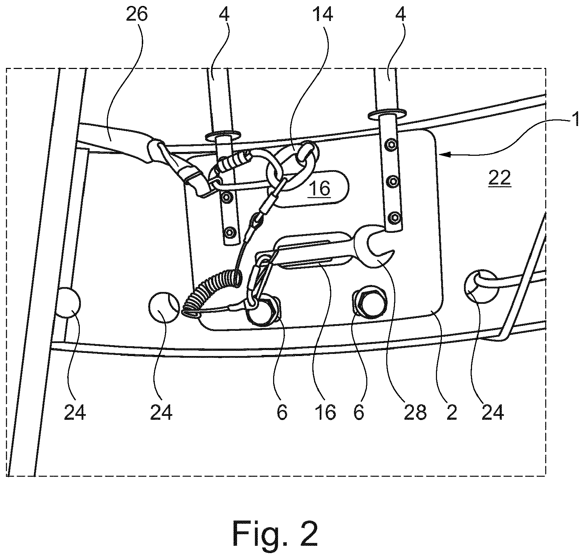

To facilitate the understanding of this invention, a number of terms are defined below. Terms defined herein have meanings as commonly understood by a person of ordinary skill in the areas relevant to the present invention. Terms such as "a", "an" and "the" are not intended to refer to only a singular entity, but include the general class of which a specific example may be used for illustration. The terminology herein is used to describe specific embodiments of the invention, but their usage does not delimit the invention, except as outlined in the claims. With reference to Figures 1 and 2, an adjustment device 1 comprises a plate 2, two handles 4 extending from the plate, and two attachment points 6 (acting as fasteners). The plate is a rectangular, planar plate. Each of the two handles is attached to a first major surface of the plate, and are adjacent to opposed edges of the plate. Each of the two handles extends over and beyond a first edge 8 of the plate. The two attachment points are adjacent to a second edge 10 of the plate opposed to the first edge. Each of the two attachment points is a through hole to allow a bolt to pass through the plate and to extend into a bolt hole 12 in a machine part to which the device is to be attached. Each through hole is dimensioned such that the device may be securely attached to the machine part by being bolted to the machine part via the bolt holes in that machine part. The attachment points are spaced apart such that sequential bolt holes in the machine part may be used to securely attach the device to that machine part.

The device comprises a security loop 14 (acting as a securement point) adjacent to the first edge of the plate.

The device further comprises two further apertures 16 through the plate that allow an operator to grip the device to thereby more readily carry the device before and after use.

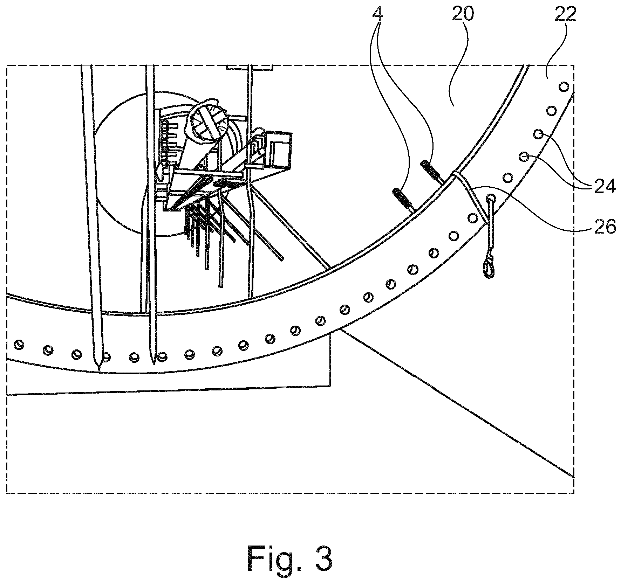

During use, a mid-section 20 of a wind turbine (acting as a first machine part) is suspended by a crane above and lowered onto a base section of a wind turbine (acting as a second machine part). Around the periphery of the base section and mid-section of the wind turbine is a flange 22 comprising a series of through holes 24 that allow the bottom section and mid-section to be bolted together. The device is bolted to the inside of the flange of the mid-section such that the handles of the device extend away from the wall of the mid-section (see Figure 3). A first end of a security line 26 is fastened to the security loop and a wrench 28 is also fastened to the security loop. The second end of the security line is secured to the mid-section to ensure that the device is secured to the mid-section if the bolts fastening the device to the mid-section fail.

Typically, the bolt holes of the base section and the bolt holes of the mid-section are not aligned when the mid-section is initially lowered onto the base section. Accordingly, an operator grips the two handles of the device and applies a force to the device via the handles to thereby adjust the position of the mid-section relative to the position of the base section. In this way the operator may readily and quickly adjust the position of the mid-section to subsequently bolt the mid-section to the base section without needing to insert their hands or fingers into the bolt holes of the mid-section of base section. As a result, the risk of injury to the operator is significantly reduced.

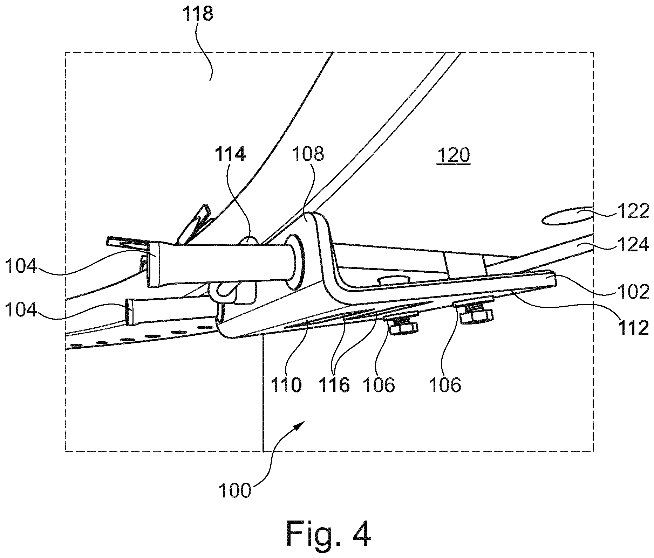

In an alternative embodiment, with reference to Figure 4, an adjustment device 100 comprises a plate 102, two handles 104 extending from the plate, and two attachment points 106 (acting as fasteners). The plate is a rectangular, planar plate with a flange 108 along a first edge 110 of the plate. Each of the two handles is attached to the flange, and are adjacent to opposed edges of the plate. Each handle extends from the flange away from the plate substantially parallel to the plane of the plate. The two attachment points are adjacent to a second edge 112 of the plate opposed to the flange on the first edge. Each of the two attachment points is a through hole to allow a bolt to pass through the plate and to extend into a bolt hole in a machine part to which the device is to be attached. Each through hole is dimensioned such that the device may be securely attached to the machine part by being bolted to the machine part via the bolt holes in that machine part. The attachment points are spaced apart such that sequential bolt holes in the machine part may be used to securely attach the device to that machine part.

The device comprises a security loop 114 (acting as a securement point) on the flange between the two handles.

The device further comprises two further apertures 116 through the plate that allow an operator to grip the device to thereby more readily carry the device before and after use.

During use, a mid-section 118 of a wind turbine (acting as a first machine part) is suspended by a crane above and lowered onto a base section of a wind turbine (acting as a second machine part). Around the periphery base section and mid-section of the wind turbine where the two sections are to be joined is a flange 120 comprising a series of through holes 122 that allow the bottom section and mid-section to be bolted together. The flange of the mid-section comprises a lip 124 that is a continuation of the wall of the mid-section. The device is bolted to the inside of the flange of the mid-section such that the flange of the device is adjacent to the inside of the flange of the mid-section, and the opposed second edge of the plate is mounted onto the lip of the flange of the mid-section. The handles of the device extend away from the wall of the mid-section. A first end of a security line (not shown) is fastened to the security loop. The second end of the security line is secured to the mid-section to ensure that the device is secured to the mid-section if the bolts fastening the device to the mid-section fail. Typically, the bolt holes of the base section and the bolt holes of the mid-section are not aligned when the mid-section is initially lowered onto the base section. Accordingly, an operator grips the two handles of the device and applies a force to the device via the handles to thereby adjust the position of the mid-section relative to the position of the base section. In this way the operator may readily and quickly adjust the position of the mid-section to subsequently bolt the mid-section to the base section without needing to insert their hands or fingers into the bolt holes of the mid-section of base section. As a result, the risk of injury to the operator is significantly reduced.

Further variations and modifications of the invention are contemplated and included within the scope of the invention.

## Claims

1. An adjustment device comprises a plate, at least one handle extending from the plate, and at least two fasteners, the plate extending in a plane and the at least one handle extending from the plate within or parallel to the plane, wherein the at least two fasteners are configured to allow the device to be fastened to a first machine part such that by gripping and applying force to the at least one handle, the position of the first machine part may be adjusted relative to a second machine part.

2. The device of claim 1, wherein the at least one handle extends over or from a first edge of the plate.

3. The device of claim 2, wherein the at least two fasteners are located adjacent to a second edge of the plate that is opposed to the first edge of the plate.

4. The device of any one preceding claim comprising two handles.

5. The device of claim 4, wherein the handles are provided adjacent to opposed edges of the device.

6. The device of any one preceding claim, wherein the plate comprises a flange along the first edge.

7. The device of claim 6, wherein the at least one handle extends from the flange.

8. The device of any one preceding claim, wherein the device comprises a securement point.

9. A method of adjusting the position of first machine part relative to the position of a second machine part, the method comprising the steps:
providing a device according to the first aspect of the invention;
attaching the device to the first machine part; and
applying force to the handles of the device to thereby adjust the position of the first machine part relative to the first machine part.
